Europäisches Patentamt

European Patent Office

Office européen des brevets

(11) Publication number: **0 137 120**
**B1**

(12) EUROPEAN PATENT SPÉCIFICATION

(45) Date of publication of patent specification: 02.09.87

(51) Int. Cl.⁴: **B 29 D 7/01**, B 29 C 47/00

(21) Application number: 84107418.0

(22) Date of filing: 27.06.84

(54) Process for reducing surface melt fracture during extrusion of ethylene polymers.

(30) Priority: 28.06.83 US 508670

(43) Date of publication of application:
17.04.85 Bulletin 85/16

(45) Publication of the grant of the patent:
02.09.87 Bulletin 87/36

(84) Designated Contracting States:
AT BE CH DE FR GB IT LI NL SE

(56) References cited:
DE-B-1 229 711
DE-B-1 479 931
DE-B-2 830 882
US-A-4 055 389
US-A-4 282 177
US-A-4 348 349

AMERICAN INSTITUTE CHEMICAL ENGINEERS
JOURNAL, 1976, vol.22, C.J.S.PETRIE,
M.M.DENN "Instabilities in polymer
processing" pages 209-236

(73) Proprietor: UNION CARBIDE CORPORATION
39 Old Ridgebury Road
Danbury Connecticut 06817 (US)

(72) Inventor: Ramamurthy, Arakalgud
Venkatapathia
19 Kingsbridge Road
Somerset 08873 New Jersey (US)

(74) Representative: Barz, Peter, Dr. et al
Patentanwälte Dr. V. Schmied-Kowarzik Dipl.-
Ing. G. Dannenberg Dr. P. Weinhold Dr. D. Gudel
Dipl.-Ing. S. Schubert Dr. P. Barz
Siegfriedstrasse 8
D-8000 München 40 (DE)

## Description

This invention relates to a process for reducing melt fracture, particularly surface melt fracture, during extrusion of a molten narrow molecular weight distribution, linear, ethylene polymer, under conditions of flow rate and melt temperature which would otherwise produce such melt fracture.

Most commercial low density polyethylenes are polymerized in heavy walled autoclaves or tubular reactors at pressures as high as 345 MPa (50,000 psi) and temperatures up to 300°C. The molecular structure of high pressure low density polyethylene is highly complex. The permutations in the arrangement of its simple building blocks are essentially infinite. High pressure resins are characterized by an intricate long chain branched molecular architecture. These long chain branches have a dramatic effect on the melt rheology of the resins. High pressure low density polyethylene resins also possess a spectrum of short chain branches generally 1 to 6 carbon atoms in length which control resin crystallinity (density). The frequency distribution of these short chain branches is such that, on the average, most chains possess the same average number of branches. The short chain branching distribution characterizing high pressure low density polyethylene can be considered narrow.

Low density polyethylene can exhibit a multitude of properties. It is flexible and has a good balance of mechanical properties such as tensile strength, impact resistance, burst strength, and tear strength. In addition, it retains its strength down to relatively low temperatures. Certain resins do not embrittle at temperatures as low as −70°C. Low density polyethylene has good chemical resistance, and it is relatively inert to acids, alkalis, and inorganic solutions. It is, however, sensitive to hydrocarbons, halogenated hydrocarbons, and to oils and greases. Low density polyethylene has excellent dielectric strength.

More than 50% of all low density polyethylene is processed into film. This film is primarily utilized in packaging applications such as for meat, produce, frozen food, ice bags, boilable pouches, textile and paper products, rack merchandise, industrial liners, shipping sacks, pallet stretch and shrink wrap. Large quantities of wide heavy gauge film are used in construction and agriculture.

Most low density polyethylene film is produced by the tubular blown film extrusion process. Film products made by this process range in size, from tubes which are about 5 cm (two inches) or less in diameter, and which are used as sleeves or pouches, to huge bubbles that provide a lay flat of up to about 6 m (twenty feet) in width, and which, when slit along an edge and opened up, will measure up to about 12 m (forty feet) in width.

Polyethylene can also be produced at low to medium pressures by homopolymerizing ethylene or copolymerizing ethylene with various alpha-olefins using heterogeneous catalysts based on transition metal compounds of variable valence. These resins generally possess little, if any, long chain branching and the only branching to speak of is short chain branching. Branch length is controlled by comonomer type. Branch frequency is controlled by the concentration of comonomer(s) used during copolymerization. Branch frequency distribution is influenced by the nature of the transition metal catalyst used during the copolymerization process. The short chain branching distribution characterizing transition metal catalyzed low density polyethylene can be very broad. Linear low density polyethylene can also be produced by high pressure techniques as is well known in the art.

US—A—4,302,566 discloses that ethylene copolymers, having a density of 0.91 to 0.96, a melt flow ratio of greater than or equal to 22 to less than or equal to 32 and a relatively low residual catalyst content can be produced in granular form, at relatively high productivities if the monomer(s) are copolymerized in a gas phase process with a specific high activity Mg-Ti containing complex catalyst which is blended with an inert carrier material.

US—A—4,302,565 discloses that ethylene copolymers, having a density of 0.91 to 0.96, a melt flow ratio of greater than or equal to 22 to less than or equal to 32 and a relatively low residual catalyst content can be produced in granular form, at relatively high productivities, if the monomer(s) are coplymerized in a gas phase process with a specific high-activity Mg-Ti-containing complex catalyst which is impregnated in a porous inert carrier material.

The polymers as produced, for example, by the processes of said applications using the Mg-Ti-containing complex catalyst possess a narrow molecular weight distribution, Mw/Mn, of about greater than or equal to 2.7 or less than or equal to 4.1.

Low density polyethylene: rheology

The rheology of polymeric materials depends to a large extent on molecular weight and molecular weight distribution.

In film extrusion, two aspects of rheological behavior are important: shear and extension. Within a film extruder and extrusion die, a polymeric melt undergoes severe shearing deformation. As the extrusion screw pumps the melt to, and through, the film die, the melt experiences a wide range of shear rates. Most film extrusion processes are thought to expose the melt to shear at rates in the 100—5000 sec$^{-1}$ range. Polymeric melts are known to exhibit what is commonly termed shear thinning behavior, i.e., non-Newtonian flow behavior. As shear rate is increased, viscosity (the ratio of shear stress, $\tau$, to shear rate, $\lambda$) decreases. The degree of viscosity decrease depends upon the molecular weight, its distribution and molecular configuration, i.e. long chain branching of the polymeric material. Short chain branching has little effect on shear viscosity. In general, high pressure low density polyethylenes have a broad molecular weight distribution and show enhanced shear thinning behavior in the shear rate range common to film extrusion. The narrow molecular weight distribution resins used in the present invention exhibit reduced shear thinning behavior at extrusion grade shear rates. The consequences of these differences are that the narrow distribution resins used in the present invention require higher power and develop higher pressures during extrusion than the high pressure low density polyethylene resins of broad molecular weight distribution and of equivalent average molecular weight.

The rheology of polymeric materials is customarily studied in shear deformation. In simple shear, the velocity gradient of the deforming resin is perpendicular to the flow direction. The mode of deformation is experimentally convenient but does not convey the essential information for understanding material response in film fabrication processes. As one can define a shear viscosity in terms of shear stress and shear rate, i.e.:

$$\eta \text{ shear}=\tau_{12}/\lambda$$

where:

$\eta$ shear=shear viscosity (mPa $\cdot$ s×100; poise)
$\tau_{12}$=shear stress ($10^{-7}$ MPa; dynes/cm$^2$)
$\lambda$=shear rate (sec$^{-1}$) an extensional viscosity can be defined in terms of normal stress and strain rate, i.e.:

$$\eta \text{ ext}=\pi/\varepsilon$$

$\eta$ ext=extensional viscosity (mPa $\cdot$ s×100; poise)
$\pi$=normal stress ($10^{-7}$ MPa; dynes/cm$^2$)
$\varepsilon$=strain rate (sec$^{-1}$).

During extrusion of a high molecular weight ethylene polymer having a narrow molecular weight distribution through dies, as with other such polymeric materials, "melt fracture" occurs when the extrusion rate exceeds a certain critical value. "Melt Fracture" is a general term used by the polymer industry to describe a variety of extrudate irregularities observed during extrusion of molten polymers. The occurrence of melt fracture severely limits the rate at which acceptable products can be fabricated under commercial conditions. The occurrence of melt fracture was first described by Nason in 1945 and since then several investigators have studied this in an attempt to understand the underlying mechanism(s) for its occurrence. C. J. S. Petrie and M. M. Denn (American Institute Chemical Engineers Journal, Vol. 22, pages 209—236, 1976) have presented a critical review of the literature which indicates that the present understanding of the mechanism(s) leading to melt fracture is far from complete.

The melt fracture characteristics of a molten polymer is usually studied using a capillary rheometer. The polymer at a given temperature is forced through a capillary die of known dimensions at a given flow rate. The pressure required is noted and the emerging extrudate is examined for surface characteristics.

The extrudate surface characteristics of linear low density polyethylene (LLDPE) resins, as determined with a capillary rheometer are typical of many linear narrow distribution polymers. They indicate that at low shear stresses (less than approximately 0.14 MPa (20 psi)), the emerging extrudates from a capillary die are smooth and glossy. At a critical shear stress (approximately 0.14 to 0.15 MPa (20—22 psi)), the extrudates exhibit loss of surface gloss. The loss of gloss is due to fine scale roughness of the extrudate surface which can be perceived under a microscope at a moderate magnification 20—40×). This condition represents the 'onsert' of surface irregularities and occurs at a critical shear stress in the die. Above the critical stress, two main types of extrudate melt fracture can be identified with LLDPE resins: surface melt fracture and gross melt fracture. The surface melt fracture occurs over a shear stress range of approximately (.07 to 0.46 MPa (10—65 psi) and results in increasing severity of surface roughness. In its most severe form, it appears as 'sharkskin'. The surface irregularities occur under apparently steady flow conditions. That is, no fluctuation in either the pressure or the flow rate is observed. At a shear stress of approximately 0.46 MPa (65 psi), the flow becomes unsteady when both the pressure and the flow rate fluctuates between two extremes and the emerging extrudates correspondingly exhibit smooth and rough surfaces. This is the onset of gross melt fracture and has been a subject of intense investigation by several investigators because of its severity. With further increase in shear stress, the extrudates become totally distorted and show no regularity.

Several mechanisms have been proposed in the literature for the occurrence of surface and gross melt fracture. Surface melt fracture of the sharkskin type has been proposed to be due to effects at the die exit where the viscoelastic melt is subjected to high local stresses as it parts company with the die surface. This leads to cyclic build up and release of surface tensile forces at the die exit resulting in the observed surface melt fracture. Another mechanism for surface melt fracture proposes differential recovery, due to the elasticity, between the skin and core of the extrudate as a primary cause. On the other hand, gross melt fracture has been proposed to be due to die land and/or die entry effects. The proposed mechanisms include: 'slip-stick' in the die land region; tearing of the melt in the die entry region due to exceeding the melt strength; and, propagation of spiralling flow instabilities in the die entry region.

Under commercial film fabrication conditions (shear stress range approximately 0.18 to 0.46 MPa (25—65 psi) with conventional blown film dies, predominantly surface melt fracture of the sharkskin type occurs with LLDPE resins resulting in commercially unacceptable products.

There are several methods for eliminating surface melt fracture under commercial film fabrication conditions. These are aimed at reducing the shear stresses in the die and include: increasing the melt temperature; modifying the die geometry; and, use of slip additives in the resin to reduce friction at the wall. Increasing the melt temperature is not commerically useful since it lowers the rate for film formation due to bubble instabilities and heat transfer limitations. Another method for eliminating surface melt fracture is described in US—A—3,920,782. In this method, surface melt fracture formed during extrusion of polymeric materials is controlled or eliminated by cooling an outer layer of the material so it emerges from the die with a reduced temperature while maintaining the bulk of the melt at the optimum working temperature. However, this method is difficult to employ and control.

The invention of US—A—3,920,782 is apparently based on the inventor's conclusions that the onset of surface melt fracture under his operating conditions with his resins is a function, basically of exceeding a critical linear velocity with his resins through his dies at his operating temperatures. In the process of the present invention, however, the onset of surface melt fracture in the resins under the present operating conditions is a function, primarily of exceeding a critical shear stress.

US—A—3,382,535 discloses a means for designing dies which are to be used for the high speed extrusion coating of wire and cable with plastic materials such as polypropylene, high density and low density polyethylene together with their copolymers, which are responsive, or sensitive, to the taper angles of the extrusion die. The dies of this patent are designed to avoid gross melt fracture of the extruded plastic wire coating which is encountered at significantly higher stresses than that for surface melt fracture encountered during film formation.

The invention of US—A—3,382,535 resides in the designing of the taper angle of the die entry so as to provide a curvilinear die configuration (Figures 6 and 7 of the patent) which converges in the direction of flow of the resin. This procedure, however, of, in effect, decreasing the taper angle of the die, will result in an increase in the critical shear rate of the resin processed through the die. This reduces gross distortions as a function only of the angle of entry in and/or to the die. Surface melt fracture is insensitive to taper angles at the die entry and the present invention relates to reducing surface melt fracture as a function of the materials of construction of the die land region including the die exit.

US—A—3,879,507 discloses a means of reducing melt fracture during the extrusion of foamable compositions into film or sheet. This method involves increasing the length of the die land and/or slightly tapering the die gap, while retaining or decreasing the die gap, which is apparently to be relatively narrow, as compared to the prior art (see column 4, lines 2—6) and of the order of 0.64 mm (0.025 inches or 25 mils; column 5, line 10). This kind of melt fracture is produced by premature bubble formation at the surface. This melt fracture, however, is totally different than the melt fracture experienced in processing LLDPE resins for film formation. In other words, the melt fracture is not as a result of rheological properties as discussed herein. Die modifications are designed to reduce the shear stress in the die land region to be below the critical stress level (approximately 0.14 MPa (20 psi)) by either enlarging the die gap (US—A—4,243,619 and 4,282,177) or heating the die lip to temperatures significantly above the melt temperature. Enlarging the die gap results in thick extrudates which must be drawn down and cooled in the film blowing process. While LLDPE resins have excellent drawdown characteristics, thick extrudates increase the molecular orientation in the machine direction and results in directional imbalance and reduction in critical film properties such as tear resistance. Also, thick extrudates limit the efficiency of conventional bubble cooling systems which result in reduced rates for stable operation. The wide gap technology has other disadvantages. The required gap is a function of extrusion rate, resin melt index and melt temperature. The wide gap configuration is not suitable for processing conventional Low Density Polyethylene (LD-LFPE) resins. Thus, die gap changes are required to accommodate the flexibility expected by the fabricator with a given line.

The heated lip concept is aimed at reducing stresses at the die exit and involves extensive modifications requiring efficient insulation of the hot lips from the rest of the die and from the air ring.

US—A—3,125,547 discloses a polyolefin composition involving the addition of a fluorocarbon polymer to provide improved extrusion characteristics and melt fracture free extrudates at high extrusion speeds. This is based on the inventor's conclusion that the slip-stick phenomenon at high extrusion speeds and the resulting herring bone pattern on the extrudate surface are due to poor lubrication at the die orifice. The use of the fluorocarbon polymer is intended to promote lubrication and reduce the stresses involved to obtain melt fracture free extrudates. The present invention, however, it based on an exactly opposite reasoning in that, it is the lack of adhesion, rather than lack of lubrication, at the polymer/metal interface in the die land region as the cause of both surface and gross melt fracture in LLDPE resins. The present invention, thus aims at improving the adhesion at the interface by proper choice of the material of construction of the die land region, including the die exit, and the use of an adhesion promoter in the resin to achieve melt fracture reduction in extrudates. The practice of US—A—3,125,547 drastically reduces the stresses with dies constructed from conventional materials which, apparently suggests a modification of the rheological properties of the polyolefin resin due to the presence of the fluorocarbon polymer. The process of the present invention, involving a different material of construction for the die land region, achieves melt fracture reduction without significantly affecting the rheological properties of the resin.

US—A—4,342,848 discloses the use of polyvinyloctadecyl ether as a processing modified to obtain smoother surface of the extrudates and improved film properties with high density polyethylene resins. This additive, however, was found to be unsuitable for melt fracture reduction with LLDPE resins.

Additives for use as processing aids to obtain melt fracture reduction in extrudates, are expensive and the added cost, depending on the required concentration, may be prohibitive in resins, such as granular LLDPE, intended for commodity applications. Additives influence the rheological properties of the base resin and, in excess amounts, may adversely affect critical film properties including gloss, transparency, blocking and heat sealability characteristics of the product.

US—A—4,348,349 discloses a process for reducing melt fracture formed during extrusion of a molten narrow molecular weight distribution, linear, ethylene polymer, said process comprising the extrusion of said polymer through a die having a discharge outlet defining an exit die gap formed by opposing die lip surfaces and wherein one surface of the die lip and/or die land in contact with the molten polymer extends beyond the opposing surface of the die lip and/or die land in the direction of the axis of the flow of the molten polymer through the die exit.

Furthermore, it is known in the art to use, for the extrusion of thermoplastic sheet material, a die having a die land region made from stainless steel, see e.g. US—A—4,055,389.

In the process of the present invention, melt fracture, particularly surface melt fracture, can be substantially reduced by adding an adhesion promoter to the polymer, extruding the narrow molecular weight distribution ethylene polymer at normal film extrusion temperatures through a die having a die land region defining opposing die exit surfaces terminating in a die gap and wherein at least one, and preferably both of the opposing die land surfaces, preferably including the die exit, are fabricated from stainless steel to provide at least one and preferably two stainless steel surfaces in contact with the molten polymer with adhesion promoter, and wherein the length of the die land to the width of the die gap is 35:1 to 60:1, preferably 45:1 to 55:1. The utility of the present invention arises as a result of the discovery that the primary mechanism for the onset of melt fracture in LLDPE resins is the initiation of slip of polymer melt at the die wall. Slip is due to the breakdown of adhesion at the polymer/metal interface under flowing conditions and occurs at a critical shear stress. Adhesion is a surface phenomenon being strongly dependent on the nature of surfaces and the intimacy of contact of surfaces. Thus, techniques to provide good adhesion at the flowing polymer/die wall interface will result in the reduction of surface melt fracture for LLDPE resins. Improvements in adhesion can be achieved by either proper choice of materials of construction of the die for a given resin or use of adhesion promoters in the resin formulation for a given material or a proper combination of both. In the present invention, it has been found that use of the stainless steel surface for the die land region in combination with a long die land length and an adhesion promoter in the resin, reduces melt fracture during film fabrication of LLDPE resins with narrow die gaps at commercial rates.

In the case where only one surface of the opposing die land is constructed from the stainless steel, then surface melt fracture is reduced or eliminated on the surface of the polymer adjacent to the stainless steel surface. If both surfaces of the opposing die land are constructed from stainless steel, then both surfaces of the polymer would have reduced melt fracture.

Films suitable for packaging applications must possess a balance of key properties for broad end-use utility and wide commercial acceptance. These properties include film optical quality, for example, haze, gloss, and see-through characteristics. Mechanical strength properties such as puncture resistance, tensile strength, impact strength, stiffness, and tear resistance are important. Vapor transmission and gas permeability characteristics are important considerations in perishable goods packaging. Performance in film converting and packaging equipment is influenced by film properties such as coefficient of friction, blocking, heat sealability and flex resistance. Low density polyethylene has a wide range of utility such as in food packaging and non-food packaging applications. Bags commonly produced from low density polyethylene include shipping sacks, textile bags, laundry and dry cleaning bags and trash bags. Low density polyethylene film can be used as drum liners for a number of liquid and solid chemicals and as protective wrap inside wooden crates. Low density polyethylene film can be used in a variety of agricultural and horticultural applications such as protecting plants and crops, as mulching, for storing of fruits and vegetables. Additionally, low density polyethylene film can be used in building applications such as a moisture or moisture vapor barrier. Further, low density polyethylene film can be coated and printed for use in e.g. newspapers or books.

Possessing a unique combination of the aforedescribed properties, high pressure low density polyethylene is the most important of the thermoplastic packagings films. It accounts for about 50% of the total usage of such films in packaging. Films made from the polymers of the present invention, preferably the ethylene hydrocarbon copolymers, offer an improved combination of end-use properties and are especially suited for many of the applications already served by high pressure low density polyethylene.

An improvement in any one of the properties of a film such as elimination or reduction of surface melt fracture or an improvement in the extrusion characteristics of the resin or an improvement in the film extrusion process itself is of the utmost importance regarding the acceptance of the film as a substitute for high pressure low density polyethylene in many end use applications.

Fig. 1 shows a cross section of a spiral/spider annulus die.

Figure 2 shows a cross section of a spiral die.

Fig. 3 shows a configuration of the die land region wherein the opposing stainless steel surfaces are provided by stainless steel inserts.

Fig. 4 shows a configuration of the die land region wherein the opposing stainless steel surfaces are provided by solid stainless steel construction of the stainless steel collar and stainless steel pin.

In accordance with the present invention, there is provided a method for reducing surface melt fracture during extrusion of a molten narrow molecular weight distribution, linear, ethylene polymer, under conditions of flow rate and melt temperature which would otherwise produce such melt fracture which comprises extruding said polymer through a die having a die land region defining opposing surfaces terminating in a die gap which is characterized by adding an adhesion promoter to said ethylene polymer and in that at least one of said opposing surfaces defined by said die land region is fabricated from stainless steel to provide at least one stainless steel surface adjacent to the molten polymer and wherein the length of the die land to the width of the die gap is 35:1 to 60:1 and preferably 45:1 to 55:1 whereby melt fracture is reduced on the surface of the polymer adjacent to said stainless steel surface.

Preferably both opposing surfaces are fabricated from stainless steel.

Dies

Advantageously, the molten ethylene polymer can be extruded through a die such as a spiral annular die or slit die, preferably an annular die, having a narrow die gap greater than 0.127 mm (5 mils) and preferably 0.127 to 1.0 mm (5—40 mils). Advantageously, when processing LLDPE resins, it is no longer required to extrude the molten ethylene polymer through a die having a die gap of greater than about 1.25 mm (50 mils) to less than about 3.0 mm (120 mils), as described in US—A—4,243,619. Conventionally, die land construction has been predominantly based on materials fabricated from nickel or hard chrome plated steel.

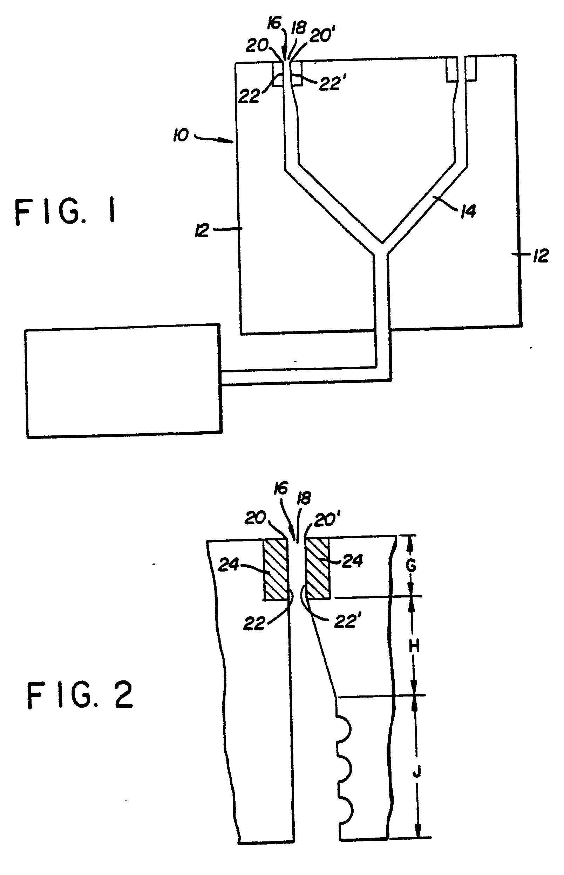

Fig. 1 is a cross-sectional view of a spiral/spider annular die 10 through which the molten thermoplastic ethylene polymer is extruded to form a single layer film, tube or pipe. Die block 12 contains channels 14 for directing the polymer to the die exit. As the molten thermoplastic ethylene polymer is extruded, it spreads out as it passes into the die channels 14.

Referring to Fig. 2, which is a cross-section of a spiral die, there is indicated a spiral section J land entry section H and die land G. With reference to Figs. 1 and 2, at the exit of the die, there is a die discharge outlet identified generally by reference numeral 16. The discharge outlet defines an exit die gap 18 which is formed by opposing surfaces of die lips 20 and 20' extending from opposing die land region surfaces 22 and 22'.

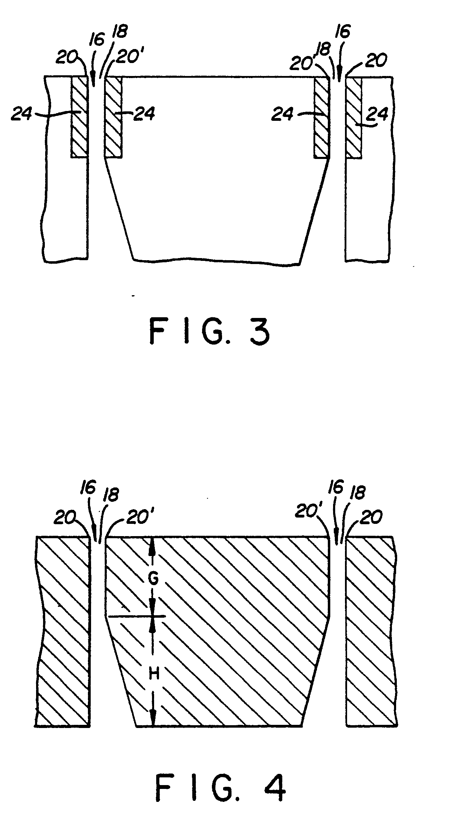

As shown in Figs. 3 and 4, the die land region shows a configuration wherein opposing surfaces are fabricated from stainless steel as contrasted to conventional nickel or chrome plated steel. The surfaces can be provided by inserts 24 which are secured, preferably detachably secured to the pin and the collar. The inserts can be detachably secured to the pin and collar by any suitable means such as by provision of threaded elements disposed interiorly of the inserts which threadably engage in a mating relationship of threaded elements of the corresponding surface of the pin and collar. The length of the inserts are preferably 45 to 55 times the width of the gap between the opposing surfaces. Other techniques for providing the stainless steel surface can be utilized such as by fabricating the entire pin and collar from stainless steel as shown in Fig. 4.

The adhesion promoter for the stainless steel surface can be included in the film forming resinous composition as one of the additives and conventional adhesion promoters such as compounds containing amines, esters, and methacrylates can be utilized. A preferred adhesion promoter for use in the present invention is a fatty diethoxylated tertiary amine (commercially available as Kemamine® AS 990 from Witco Chemical Corporation, Memphis, Tennessee). The amount of adhesion promoter to be employed generally ranges from about 50 to 3000 ppm, preferably about 300 to 800 ppm.

When a fatty diethoxylated tertiary amine is utilized, preferred amounts are within the range of about 50 to 1500 ppm and most preferably around 800 ppm.

Advantageously, the adhesion promoter can be part of a masterbatch containing antistatic and other processing aids which are added to the film forming resin.

The melt fracture is reduced on the surface of the polymer adjacent the stainless steel surface. As a result, the process can be practiced with the invention disclosed in US—A—4,348,349. Advantageously, therefore, melt fracture can be reduced on one side of a film by directing the molten polymer through the die land region wherein only the surface of film in which melt fracture is to be reduced or eliminated is in contact with the stainless steel surface. This permits processing of multi-layer films wherein one layer is formed of LLDPE and another layer is formed from a resin which under the conditions of operation is not subject to melt fracture. Thus, by the process of the instant invention, the LLDPE resin can be passed through the die in contact with the stainless steel surface whereas the resin not subject to melt fracture is extruded in contact with the other die land surface thereby producing a multi-layer film, both outer surfaces of which would have reduced melt fracture.

As mentioned previously, the surface of the die land region adjacent to the polymer is fabricated from stainless steel. Various other types of materials were tried in an effort to reduce melt fracture. These materials included: conventional chrome plated steel; titanium nitride coated steel; pure copper; zinc plated steel; Beryllium copper; carbon steel (4140); and, nickel steel (4340). In the presence of the adhesion promoter, none of the above surfaces were found to be as effective in reducing melt fracture even with the long land length stainless steel surface.

Film extrusion
I. Blown film extrusion
The films formed as disclosed herein may be extruded by a tubular blown film extrusion process. In this process a narrow molecular weight distribution polymer is melt extruded through an extruder. This extruder may have an extrusion screw therein with a length to diameter ratio of between 15:1 to 21:1, as described in US—A—4,343,755. This application describes that this extrusion screw contains a feed, transition and metering section. Optionally, the extrusion screw can contain a mixing section such as that described in US—A—3,486,192; 3,730,492 and 3,756,574. Preferably, the mixing section is placed at the screw tip.

The extruder which may be used herein may have a 18:1 to 32:1 length to internal diameter barrel ratio. The extrusion screw used in the present invention may have a length to diameter ratio of 15:1 to 32:1. When, for example, an extrusion screw of a length to diameter ratio of 18:1 is used in a 24:1 extruder, the remaining space in the extrusion barrel can be partially filled with various type of plugs, torpedoes, or static mixers to reduce residence time of the polymer melt.

The extrusion screw can also be of the type described in US—A—4,329,313. The molten polymer is then extruded through a die, as will hereinafter be described.

The polymer is extruded at a temperature of about 165°C to about 260°C. The polymer is extruded in an upward vertical direction in the form of a tube although it can be extruded downward or even sideways. After extrusion of the molten polymer through the annular die, the tubular film is expanded to the desired extent, cooled, or allowed to cool and flattened. The tubular film is flattened by passing the film through a collapsing frame and a set of nip rolls. These nip rolls are driven, thereby providing means for withdrawing the tubular film away from the annular die.

A positive pressure of gas, for example, air or nitrogen, is maintained inside the tubular bubble. As is known in the operation of conventional film processes, the pressure of the gas is controlled to give the desired degree of expansion to the tubular film. The degree of expansion, as measured by the ratio of the fully expanded tube circumference to the circumference of the die annulus, is in the range 1:1 to 6:1 and preferably, 1:1 to 4:1. The tubular extrudate is cooled by conventional techniques such as, by air cooling, water quench or mandrel.

The drawdown characteristics of the polymers disclosed herein are excellent. Drawdown, defined as the ratio of the dip gap to the product of film gauge and blow up ratio, is kept less than about 250. Very thin gauge films can be produced at high drawdown from these polymers even when said polymer is highly contaminated with foreign particles and/or gel. Thin gauge films of about 0.013 to 0.076 mm (0.5 to 3.0 mils) can be processed to exhibit ultimate elongations MD greater than about 400% to about 700% and TD greater than about 500% to about 700%. Furthermore, these films are not perceived as "splitty". "Splittiness" is a qualitative term which describes the notched tear response of a film at high deformation rates. "Splittiness" reflects crack propagation rate. It is an end-use characteristic of certain types of film and is not well understood from a fundamental perspective.

As the polymer exits the annulus die, the extrudate cools and its temperature falls below its melting point and it solidifies. The optical properties of the extrudate change as crystallization occurs and a frost line is formed. The position of this frost line above the annular die is a measure of the cooling rate of the film. This cooling rate has a very marked effect on the optical properties of the film produced herein.

The ethylene polymer can also be extruded in the shape of a rod or other solid cross section using the same die geometry for only the external surface. Additionally, the ethylene polymer can also be extruded into pipe through annular dies.

II. Slot cast film extrusion
The films formed as disclosed herein may also be extruded by slot cast film extrusion. This film extrusion method is well known in the art and comprises extruding a sheet of molten polymer through a slot die and then quenching the extrudate using, for example, a chilled casting roll or water bath. The die will hereinafter be described. In the chill roll process, film may be extruded horizontally and laid on top of the chill roll or it may be extruded downward and drawn under the chill roll. Extrudate cooling rates in the slot cast process are very high. Chill roll or water batch quenching is so fast that as the extrudate cools below its melting point, crystallites nucleate very rapidly, supramoleculare structures have little time to grow and spherulites are held to a very small size. The optical properties of slot cast film are vastly improved over those characterizing films using the slower cooling rate, tubular blown film extrusion process. Compound temperatures in the slot cast film extrusion process generally run much higher than those typifying the tubular blown film process. Melt strength is not a process limitation in this film extrusion method. Both shear viscosity and extensional viscosity are lowered. Film can generally be extruded at higher output rates than practiced in the blown film process. The higher temperatures reduce shear stresses in the die and raise the output threshold for melt fracture.

Film

The film produced by the method of the present invention has a thickness of greater than about 0.0025 mm (0.10 mils) to about 0.5 mm (20 mils), preferably greater than about 0.0025 to 0.25 mm (0.10 to 10 mils), most preferably greater than about 0.0025 to 0.1 mm (0.10 to 4.0 mils). The 0.0025 to 0.1 mm (0.10 to 4.0 mil) film is characterized by the following properties: a puncture resistance value of greater than about 122.5 J/cm (7.0 in-lbs/mil); an ultimate elongation of greater than about 400%, tensile impact strength of greater than about 41 to about 163 J/cm$^3$ (about 500 to about 2000 ft-lbs/in$^3$) and tensile strength greater than about 13.8 MPa (2000 psi) to about 48.3 MPa (7000 psi).

Various conventional additives such as slip agents, antiblocking agents, and antioxidants can be incorporated in the film in accordance with conventional practice.

The ethylene polymers

The polymers which may be used in the process of the present invention are homopolymers of ethylene or copolymers of a major mol percent (greater than or equal to 80%) of ethylene, and a minor mol percent (less than or equal to 20%) of one or more $C_3$ to $C_8$ alpha olefins. The $C_3$ to $C_8$ alpha olefins should not contain any branching on any of their carbon atoms which is closer than the fourth carbon atom. The preferred $C_3$ to $C_8$ alpha olefins are propylene, butene-1, pentene-1, hexene-1, 4-methylpentene-1 and octene-1.

The ethylene polymers have a melt flow ratio of about greater than or equal to 22 to less than or equal to 50, and preferably of about greater than or equal to 25 to less than or equal to 30. The melt flow ratio value is another means of indicating the molecular weight distribution of a polymer. The melt flow ratio (MFR) range of greater than or equal to 22 to less than or equal to 50 thus corresponds to a Mw/Mn value of about 2.7 to 6.0.

The homopolymers have a density of about greater than or equal to 0.958 to less than or equal to 0.972 and preferably of about greater than or equal to 0.961 to less than or equal to 0.968. The copolymers have a density of about greater than or equal to 0.89 to less than or equal to 0.96 and preferably greater than or equal to 0.917 to less than or equal to 0.955, and most preferably, of about greater than or equal to 0.917 to less than or equal to 0.935. The density of the copolymer, at a given melt index level for the copolymer, is primarily regulated by the amount of the $C_3$ to $C_8$ comonomer which is copolymerized with the ethylene. In the absence of the comonomer, the ethylene would homopolymerize with the catalyst of the present invention to provide homopolymers having a density of about greater than or equal to 0.96. Thus, the addition of progressively larger amounts of the comonomers to the copolymers results in a progressive lowering of the density of the copolymer. The amount of each of the various $C_3$ to $C_8$ comonomers needed to achieve the same result will vary from monomer to monomer, under the same reaction conditions.

When made in the fluid bed process, polymers of the present invention are granular materials which have a settled bulk density of about 252 to 537 kg/m$^3$ (15 to 32 pounds per cubic foot) and an average particle size of the order of about 0.127 to about 1.5 mm (about 0.005 to about 0.06 inches).

For the purposes of making film in the process of the present invention, the preferred polymers are the copolymers and particularly those copolymers having a density of about greater than or equal to 0.917 to less than or equal to 0.924; and a standard melt index of greater than or equal to 0.1 to less than or equal to 5.0.

The films made in the process of the present invention have a thickness of greater than 0.0025 mm (0.1 mil) to less than or equal to 0.25 mm (10 mils) and preferably of greater than 0.0025 mm (0.1 mil) to less than or equal to 0.125 mm (5 mils).

Having set forth the general nature of the invention, the following examples illustrate some specific embodiments of the invention. It is to be understood, however, that this invention is not limited to the examples, since the invention may be practiced by the use of various modifications.

Example 1

This Example demonstrates the conventional procedure for extruding ethylene polymers into tubes.

An ethylene-butene copolymer was prepared in accordance with the procedure of US—A—4,302,566 and which is available from Union Carbide Corporation under the Trademark designation Bakelite® GRSN-7047. The copolymer also contained 800 ppm by weight of Kemamine® AS 990 available from Witco Chemical Corporation, Memphis, Tennessee. The copolymer had a nominal density of 0.918 gm/cc, a nominal melt index of 1.0 decigrams/minute and a nominal melt flow ratio of 26. The copolymer was formed into a tube by passing the resin through a conventional 6.25 cm (2-1/2 inch) diameter screw extruder having a polyethylene screw as described in US—A—4,329,313 with a Maddock mixing section, and thence into a conventional hard chrome plated steel die having a 3.5 cm (1.375 inch) land, 7.6 cm (3 inch) die collar diameter and a die pin diameter normally of 7.42 cm (2.92 inches) to give a 1.0 mm (40 mil) die gap. The sides of the die land were parallel with the flow axis of the polymer melt. The resin was extruded through the die at a rate of 23.6 kg/hr (52 lbs/hr) and at a temperature of 219°C. A 0.037 mm (1.5 mil) film was fabricated at a blow up ratio of 2 and a frost line height of 30 cm (12 inches) employing a conventional dual lip air ring. There was severe melt fracture observed on both surfaces of the tube with an average surface roughness of $3.10^{-5}$ cm (12 microinch) in the machine direction and $5.10^{-5}$ cm (20 microinch) in the transverse direction as measured with a Bendix Proficorder.

With this conventional 1.0 mm (40 mil) gap die, surface melt fracture was observed at all rates higher than 10.9 kg/hr (24 lbs/hr).

Example 2

·This Example demonstrates the improved results over Example 1 by the use of a long Stainless Steel (304) surface for the die land region.

The ethylene-butene copolymer was identical to Example 1 and contained 800 ppm of Kemamine® AS 990. The copolymer was formed into a tube by passing the resin through the conventional 6.25 cm (2-1/2 inch) diameter screw extruder and into a die having a Stainless Steel (304) surfaces for the opposing surfaces of the die land region. The length of the die land was 5.6 cm (2.2 inches) land and a die gap of 1.0 mm (40 mil). The sides of the die land were parallel with the flow axis of the polymer melt. The resin was extruded at a rate of 23.6 kg/hr (52 lbs/hr) and at a temperature of 220°C. A 0.037 mm (1.5 mil) film was fabricated at a blow up ratio of 2 and a frost line height of 33 cm (13 inches) employing a conventional dual lip air ring. There was very little surface melt fracture observed on both surface of the film with an average surface roughness of $10^{-5}$ cm (4 microinch) in the machine direction and of $1.25 \cdot 10^{-5}$ cm (5 microinch) roughness in the transverse direction as measured with a Bendix Proficorder.

With the long stainless steel (304) surface for the die land region, no surface melt fracture was observed at rates as high as 21.3 kg/hr (47 lbs/hr).

**Claims**

1. A process for substantially reducing surface melt fracture during extrusion of a molten narrow molecular weight distribution, linear, ethylene polymer under conditions of flow rate and melt temperature which would otherwise produce such surface melt fracture which comprises extruding said polymer through a die having a die land region defining opposing surfaces terminating in a die gap characterized by adding an adhesion promoter to said ethylene polymer and in that at least one of said opposing surfaces defined by said die land region is fabricated from stainless steel to provide at least one stainless steel surface adjacent to the molten polymer and wherein the length of the die land to the width of the die gap is 35:1 to 60:1 whereby melt fracture is reduced on the surface of the polymer adjacent to said stainless steel surface.

2. A process according to claim 1 wherein said adhesion promoter is a fatty diethoxylated tertiary amine.

3. A process according to claim 2 wherein said fatty diethoxylated tertiary amine is added to said ethylene polymer in an amount of 50 to 1500 parts per million.

4. A process according to any of claims 1 to 3 wherein the length of the die land to the width of the die gap is 45:1 to 55:1.

5. A process according to any of claims 1 to 4 wherein said stainless steel surface in said die land region is provided by inserts secured to the pin and collar of said die.

6. A process according to claim 5 wherein the length of said inserts is 45 to 55 times the width of said die gap.

7. A process according to claim 5 or 6 wherein said inserts extend the length or a portion of the length of said die land region.

8. A process according to any of claims 1 to 4 wherein said stainless steel surface is provided by fabricating the die pin and die collar of said die from stainless steel.

9. A process according to any of claims 1 to 8 wherein the distance between said die lips is between 0.127 to 1.0 mm (0.005 inch to 0.040 inch).

10. A process according to any of claims 1 to 9 wherein said polymer is a copolymer of greater than or equal to 80 mol percent of ethylene and less than or equal to 20 mol percent of at least one $C_3$ to $C_8$ alpha olefin.

11. A process according to claim 10 in which said polymer has a melt index of greater than or equal to 0.1 to less than or equal to 5.0.

**Patentansprüche**

1. Verfahren zur merklichen Verminderung des Oberflächen-Schmelzbruchs während des Strangpressens eines geschmolzenen, linearen Ethylenpolymeren mit schmaler Molekulargewichtsverteilung unter Bedingungen der Flußgeschwindigkeit und Schmelztemperatur, die sonst einen solchen Oberflächen-Schmelzbruch erzeugen würden, welches umfaßt die Extrusion des Polymeren durch ein Werkzeug mit einem Führungskanalbereich, der gegenüberliegende Oberflächen begrenzt, die in einem Düsenspalt enden, dadurch gekennzeichnet, daß man dem Ethylenpolymeren eine Haftpromotor zugibt und daß wenigstens eine der gegenüberliegenden Oberflächen, die durch den Führungskanalbereich abgegrenzt werden, aus rostfreiem Stahl hergestellt ist, um wenigstens eine Oberfläche aus rostfreiem Stahl zu schaffen, die dem geschmolzenen Polymeren benachbart ist, und bei welchem die Länge des Führungskanals zur Weite des Düsenspalts 35:1 bis 60:1 ist, wodurch Schmelzbruch an der Oberfläche des Polymeren, die der oberfläche aus rostfreiem Stahl benachbart ist, vermindert wird.

2. Verfahren nach Anspruch 1, in welchem der Haftpromotor ein diethoxyliertes tertiäres Fettamin ist.

3. Verfahren nach Anspruch 2, in welchem das diethoxylierte tertiäre Fettamin in einer Menge von 50 bis 1500 Teilen pro Million zum Ethylenpolymeren gegeben wird.

4. Verfahren nach einem der Ansprüche 1 bis 3, in welchem die Länge des Führungskanals zur Weite des Düsenspaltes 45:1 bis 55:1 ist.

5. Verfahren nach einem der Ansprüche 1 bis 4, in welchem die Oberfläche aus rostfreiem Stahl in dem Führungskanalbereich durch Einsätze geschaffen wird, die an Stift und Buchse des Werkzeugs befestigt sind.

6. Verfahren nach Anspruch 5, in welchem die Länge der Einsätze das 45- bis 55-Fache der Weite des Düsenspaltes beträgt.

7. Verfahren nach Anspruch 5 oder 6, in welchem sich die Einsätze über die Länge oder einen Teil der Länge des Führungskanalbereichs erstrecken.

8. Verfahren nach einem der Ansprüche 1 bis 4, in welchem die Oberfläche aus rostfreiem Stahl durch Herstellung des Düsenstifts und der Düsenbuchse des Werkzeugs aus rostfreiem Stahl geschaffen wird.

9. Verfahren nach einem der Ansprüche 1 bis 8, in welchem der Abstand zwischen den Düsen-Lippen zwischen 0,127 bis 1,0 mm (0.005 inch bis 0,040 inch) beträgt.

10. Verfahren nach einem der Ansprüche 1 bis 9, in welchem das Polymere ein Copolymeres aus mehr als oder gleich 80 Mol-% Ethylen und weniger als oder gleich 20 Mol-% von wenigstens einem $C_3$ bis $C_8$ alpha-Olefin ist.

11. Verfahren nach Anspruch 10, in welchem das Polymere einen Schmelzindex von größer als oder gleich 0,1 bis weniger als oder gleich 5,0 aufweist.

## Revendications

1. Procédé pour réduire sensiblement la rupture d'extrudat superficielle durant l'extrusion d'un polymère d'éthylène linéaire fondu, de distribution étroite du poids moléculaire, dans des conditions de débit d'écoulement et de température de fusion qui produiraient autrement une telle rupture d'extrudat superficielle, qui consiste à extruder ledit polymère à travers une filière possédant une zone de facettes de filière définissant des surfaces opposées aboutissant dans un entrefer de filière, caractérisé par l'addition d'un agent d'adhésivité audit polymère d'éthylène et en ce qu'au moins l'une desdites surfaces opposées définies par ladite zone de facettes de la filière est réalisée en acier inoxydable pour constituer au moins une surface d'acier inoxydable adjacente au polymère fondu, et dans lequel le rapport de la longueur des facettes de la filière à la largeur de l'entrefer de la filière est de 35:1 à 60:1 afin que la rupture d'extrudat soit réduite sur la surface du polymère à proximité immédiate de ladite surface d'acier inoxydable.

2. Procédé selon la revendication 1, dans lequel ledit agent d'adhésivité est une amine tertiaire diéthoxylée grasse.

3. Procédé selon la revendication 2, dans lequel ladite amine tertiaire diéthoxylée grasse est ajoutée audit polymère d'éthylène à raison de 50 à 1500 parties par million.

4. Procédé selon l'une quelconque des revendications 1 à 3, dans lequel le rapport de la longueur des facettes de la filière à la largeur de l'entrefer de la filière est de 45:1 à 55:1.

5. Procédé selon l'une quelconque des revendications 1 à 4, dans lequel ladite surface d'acier inoxydable située dans ladite zone des facettes de la filière est constituée par des éléments rapportés fixés au poinçon et au porte-poinçon de ladite filière.

6. Procédé selon la revendication 5, dans lequel la longueur desdits éléments rapportés est de 45 à 55 fois la largeur dudit entrefer de la filière.

7. Procédé selon la revendication 5 ou 6, dans lequel lesdits éléments rapportés s'étendent sur la longueur ou sur une partie de la longueur de ladite zone de facettes de la filière.

8. Procédé selon l'une quelconque des revendications 1 à 4, dans lequel ladite surface d'acier inoxydable est obtenue par fabrication du poinçon et du porte-poinçon de ladite filière en acier inoxydable.

9. Procédé selon l'une quelconque des revendications 1 à 8, dans lequel la distance comprise entre lesdites lèvres de la filière est comprise entre 0,127 et 1,0 mm (0,005 inch et 0,040 inch).

10. Procédé selon l'une quelconque des revendications 1 à 9, dans lequel ledit polymère est un copolymère contenant une quantité supérieure ou égale à 80 moles % d'éthylène et une quantité inférieure ou égale à 20 moles % d'au moins une alpha-oléfine en $C_3$ à $C_8$.

11. Procédé selon la revendication 10, dans lequel ledit polymère présente un indice de fluidité à l'état fondu compris entre une valeur supérieure ou égale à 0,1 et une valeur inférieure ou égale à 5,0.

FIG. 1

FIG. 2

FIG. 3

FIG. 4